# EUROPEAN PATENT APPLICATION

(11) **EP 2 409 915 A1**
(43) Date of publication of application: **25.01.2012**
(21) Application number: 11175093.1
(22) Date of filing: 22.07.2011
(51) Int. Cl.: B64C 3/48, B64C 3/20

(54) **Method for carrying out an aircraft and aircraft so obtained**

(30) Priority: 22.07.2010 IT BO20100462
(71) Applicant: Testi, Marco, 40026 Imola (BO) (IT); Benini Nabore, 48025 Riolo Terme (BO) (IT)
(72) Inventor: Testi, Marco, I-40026 IMOLA (BO) (IT)
(74) Representative: Negrini, Elena

(57) **Abstract**

A method to achieve an aircraft (1) provides a means of overlay coating (22), shaped according to the development of a flat airfoil made from a flexible laminate (23) with a film (25) and an adhesive layer (24), at filler means (21), shaped according to the aerodynamic profile chosen, so that an adhesive layer (24) contacts the filler means (21) and the film conforms to the aerodynamic surface of the aircraft (1).

Then fix the coating means (22) at filler means (21) through the adhesive layer (24), and let a flap of the coating means (22) protruding beyond the rear part of the filler means (21) and is flexibly movable with respect to filler means (21), then place and secure actuator means (3) by adhesive layer (24).

## Description

The present invention refers to aircraft and model aircraft field and in particular refers to a method for carrying out an aircraft and the aircraft so obtained.

A first known construction technique refers to aircraft carried out having an internal discontinuous structure, which is characterized by a plurality of individual elements like spar and rib connected to each other. The spar, generally shaped as tapered beam, is placed longitudinally to the structure and is involved in transferring the load along the structure itself. The ribs are cross-connected to the spar and give the desired shape to the section by supporting the external aerodynamic surface. The known spar-rib connections are both discontinuous, like riveting or bolting, and continuous, like welding or bonding structure.

A second known construction technique refers to aircraft carried out having aerodynamic load bearing surfaces able of supporting all loads acting on the aircraft. These surfaces are realized by milling a full block or by laminating a composite structures in which the spar and rib consist of some protrusions realized on the inner surface of the same aerodynamic surfaces.

A technical problem related to the first known aircraft construction technique refers to the use of a large number of components that must be joined together, having problems both related to the large number of pieces needed both and related to the difficulties associated with bonding techniques. In particular, the use of discontinuous bonding techniques generally requires a large number of operations to be performed: drilling single parts, deburring of the same, drawing, alignment of parts, insertion of the joining element and fastening of the same.

Another problem about discontinuous joints is related to the aerodynamic surfaces finish affected by the presence of such connecting elements. Joining techniques which provide the structural bonding reduces both the number of individual operations to be performed both the aerodynamic disturbance, but in the case of discontinuous structures does not guarantee a perfect aerodynamic surface because coating buckling phenomena between ribs results in an aerodynamic disturbance. Moreover articulating a rigid control surface with respect to another surface implies a superficial discontinuity, regardless of the construction method, which in turn modifies, usually in a negative way, the airflow near the articulation zone.

The composite laminating technique requires the construction of complex systems for its realization and is too expensive for small ultra light aircraft.

The main object of the present invention is to propose a method for carrying out an aircraft that has an aerodynamic surface with no defects, that doesn't present discontinuous connection elements and that ensures high maneuverability.

A further object is to propose an aircraft whose moving aerodynamic surfaces has ability to "morph" spanwise ensuring a cleaner aerodynamic profile in all operating conditions.

Another object is to propose a method for carrying out an aircraft that requires a reduced number of operations easy to implement even by unskilled personnel.

The features of the invention are explained below with particular reference to the attached drawings in which:

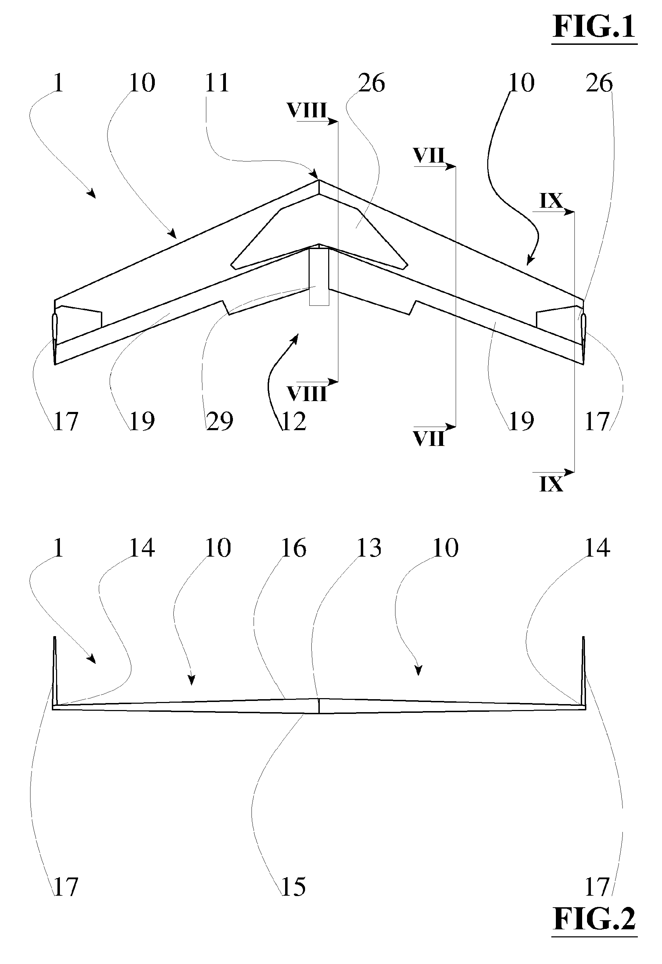

- Figure 1 shows a top view of the aircraft;
- Figure 2 shows a front view of the aircraft;

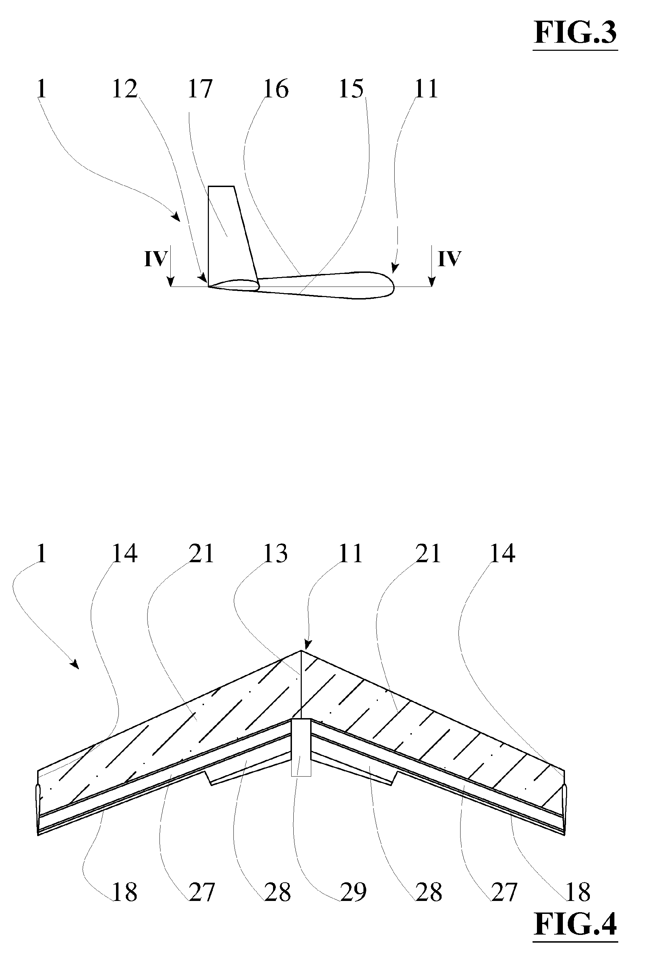

- Figure 3 shows a side view of the aircraft;
- Figure 4 shows a section view according to plane IV-IV of the aircraft of figure 3;

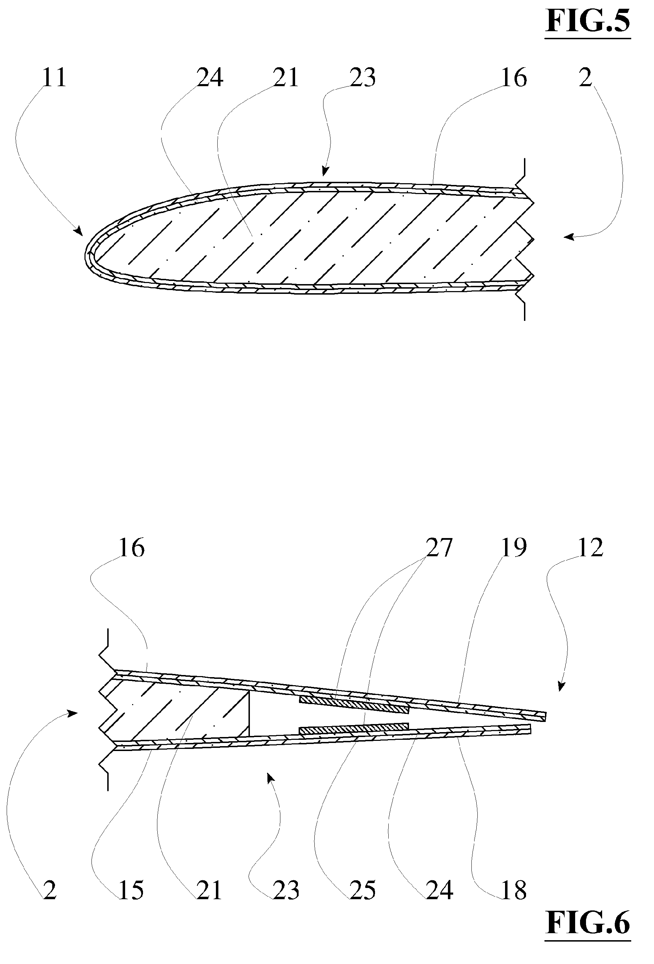

- Figures 5 and 6 shows partial views of the aircraft of figures 1;

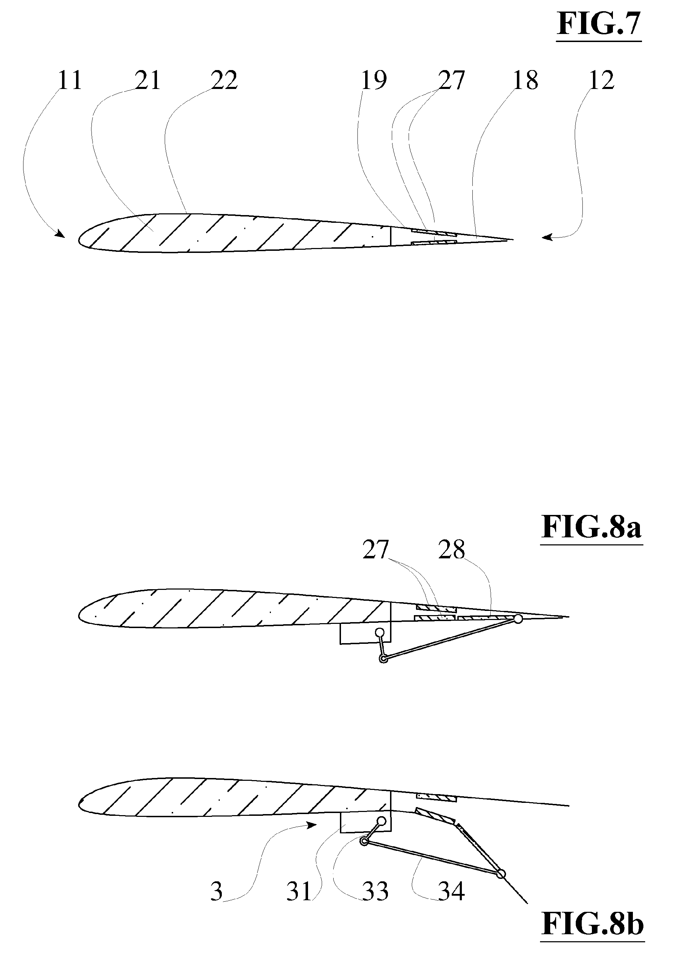

- Figure 7 shows a section view according to plane VII-VII of the aircraft of figures 1;
- Figures 8a and 8b show section views according to plane VIII-VIII of the aircraft of figure 1 respectively at not deflected and deflected configuration of the moving aerodynamic surfaces;

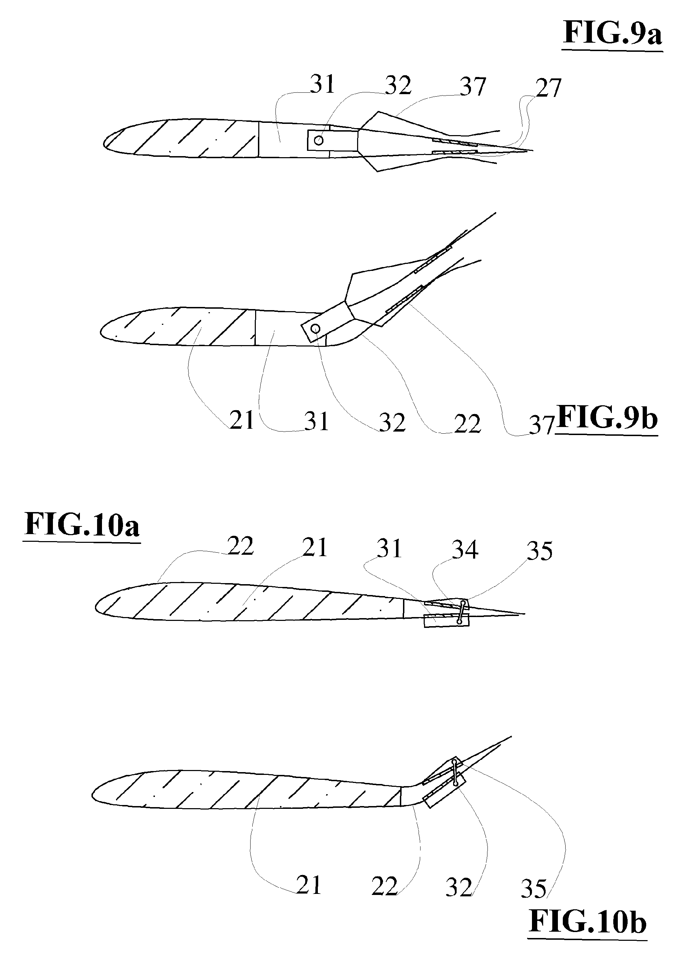

- Figures 9a and 9b show section views according to plane IX-IX of the aircraft of figure 1 respectively in the not deflected and deflected configuration of the moving aerodynamic surfaces;
- Figures 10a and 10b show variants of the aircraft of figures 9a and 9b, respectively;

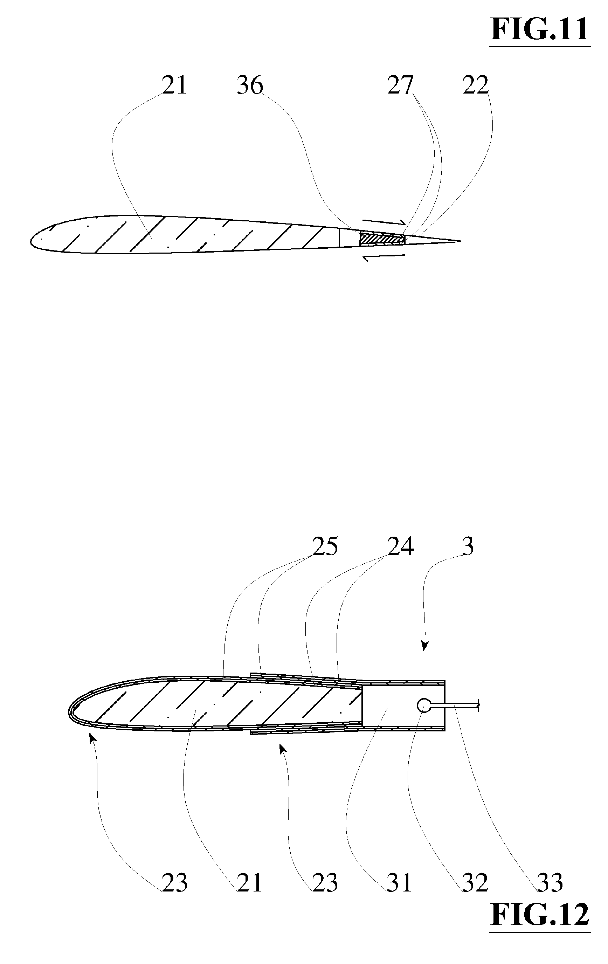

- Figure 11 shows a longitudinal section view of a variant of the aircraft of figure 1 at not deflected configuration of the moving aerodynamic surfaces;
- Figure 12 shows a section view detail of the wing connection of the aircraft of figure 1;

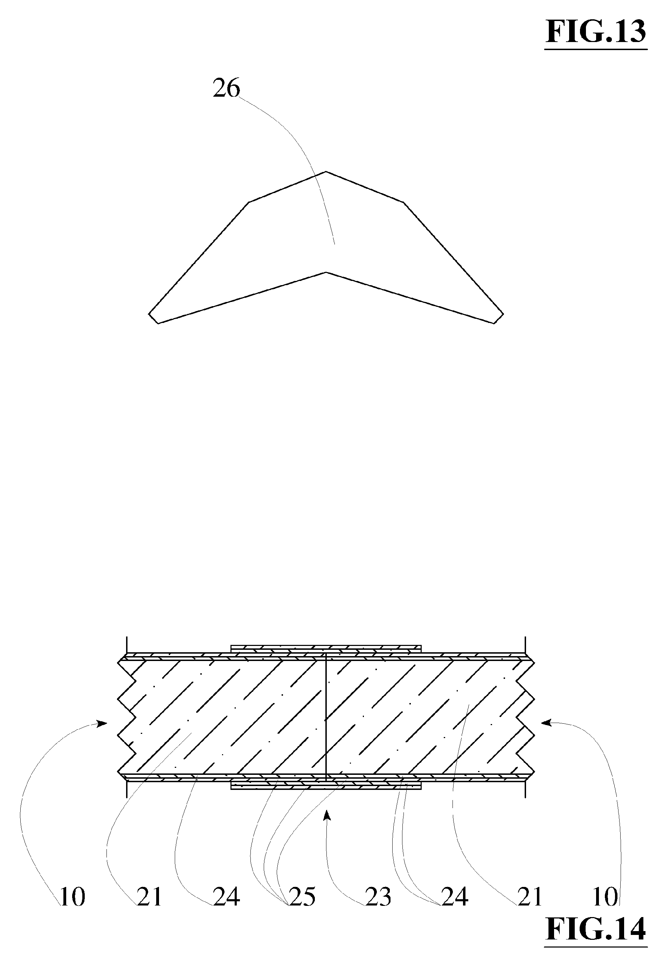

- Figure 13 shows a top view of the surface reinforcing means;
- Figure 14 shows a section view detail of the half-wings connection of the aircraft of figure 1;

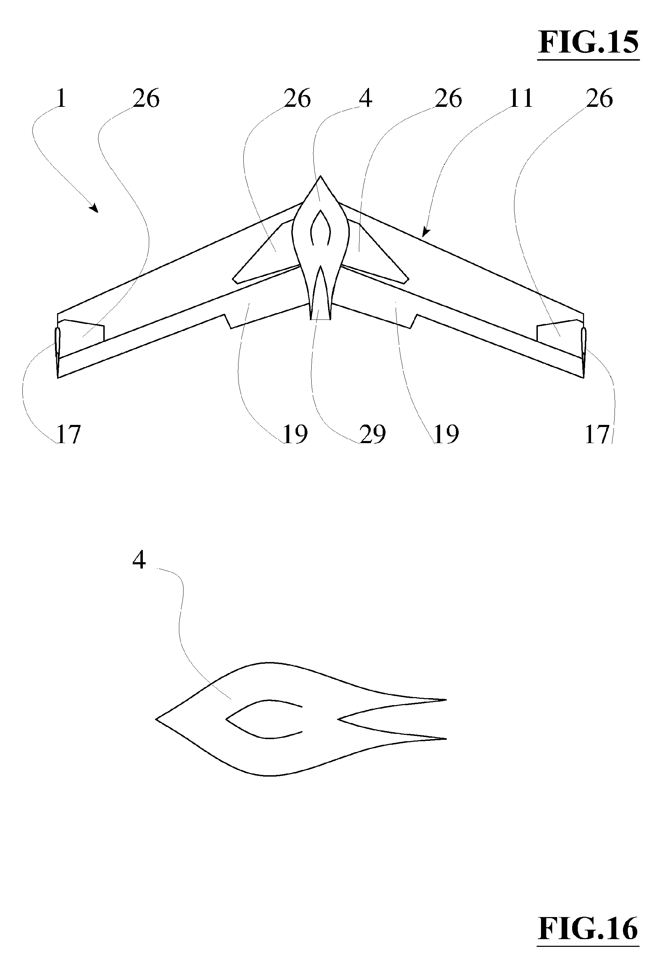

- Figure 15 shows a top view variant of the aircraft aerodynamic cover;
- Figure 16 shows an enlarged top view of the aircraft aerodynamic cover of the aircraft of figure 15.

Referring to figures from 1 to 16, numeral 1 indicates an aircraft shaped as flying wing having swept wing.

The preferred embodiment of the method for carrying out the aircraft 1 comprises the following steps:

Cutting and shaping a filler means 21 according to a desired airfoil section for at least an aerodynamic surface. The filler means 21 is cut by an hot wire cutter from a nearly rectangular block of a material like rigid foam.

Shaping a coating means 22 according to the on plane development of the aerodynamic surface. The coating means 22 consists of a flexible laminate 23 having a film layer 25 and an adhesive layer 24. The shaping is done by cutting the desired shape from a roll of flexible laminate 23 itself.

Overlapping the filler means 22 to the coating means 21 so that the adhesive layer 24 contacts the filler means 21 and the film layer 25 conforms the aerodynamic surface of the aircraft 1.

Fixing the coating means 22 to the filler means 21 by means of the adhesive layer 24. At least a flap of the coating means 22 is let protruding beyond the rear portion of the filler means 21. This flap is let free to flexibly move respect the filler means 21.

Positioning a set of actuator means 3, each one having a fixed housing and a moving member, near the end of the movable flap of the coating means 22. At each end of the coating means 22 flaps is placed an actuator means 3.

Fixing each actuator means 3 housing on the filler means 21 by means of the coating means 22 bound by the adhesive layer 24 on opposite sides of the housing, said sides being placed near the upper and the lower surfaces of the filler means 21. The above described arrangement increase the bending moment strength of the actuator means 3 bounding.

Fixing the movable member of the actuator means 3 to the movable flap of the coating means 22.

A variant of the method, especially suitable in case for making large aircraft 1, provides that the aircraft wing is divided into two half-wings 10 and in particular includes the steps described below.

Shaping the filler means 21 that form the core of each wing 10 and the coating means 22 according to the plane development of each half-wing 10.

Overlapping the coating means 22 on their respective filler means 21 and attaching thereto by means of respective adhesive layers 24.

Place the two half-wings 10 by matching their respective wing root 13 and fixing the half-wings 10 each other by setting astride the wing root 13 some surface reinforcement means 26 made with the flexible laminate 23 and bound by the respective adhesive layer 24.

In the preferred embodiment, the aircraft 1 is shaped like a flying wing having a swept wing, and comprises also two half-wings 10, a wing root 13, a pair of vertical aerodynamic surfaces placed at right angles respect to the wing 17 and 15 located at its ends, a pair of movable horizontal aerodynamic surfaces 18, 19 placed at the trailing edges 12 of each wing 10.

The structure 2 of the aircraft consists of a filler means 21 and of a coating means 22 surrounding the filler means 21 itself.

The filler means 21 has a section shaped according to a desiderate airfoil section that can vary spanwise. The profile can be complete or partially trunked in its rear part near the profile trailing edge 12.

The filler means 21 is made of a polymeric expanded rigid foam, typically a polystyrene foam and preferably Rohacell® or Styrofoam®, or other material with similar density or strength or stiffness characteristics. Said polystyrene foam is typically provided in blocks and the desired profile is obtained by cutting these blocks preferably via a hot wire cutter.

The coating means 22 is made of a flexible laminate 23 consisting of a film layer 25 and an adhesive layer 24.

The film layer 25 of the laminate 23 is made of plastic and has a texture or a color scheme carried out directly on the same when it is still plane before the assembly of the coating means 22 around the filler means 21.

The texture or a color scheme can be printed with serigraphic techniques to achieve the best graphics performance and quality.

The combination of the filler means 21 and the coating means 22 realize a structurally cooperative airfoil type, perfectly smooth and without roughness and discontinuities.

The horizontal movable aerodynamic surfaces on lower side 18 and on upper side 19 are placed along the trailing edge 12 of each half-wing 10 and are made extending flaps of the laminate 23 over the trailing edge 21 of the filler means generating a cantilever projecting edge tangent to the outer profile of the filler means 21.

The aircraft 1 comprises also vertical aerodynamic surfaces 17 and horizontal movable aerodynamic surfaces 18 and 19 placed along the trailing edge 12.

The movable horizontal aerodynamic surfaces 18 and 19 obtained have a joining means of continuous type without any gap or discontinuities that affects the entire spanwise of each half-wing 10.

The movable horizontal aerodynamic surfaces 18, 19 have a first reinforcement means 27, parallel to the trailing edge 12, placed near the back part of the filler means 21 and wide as the single half-wing 10, and a second reinforcement means 28, parallel to the first reinforcement means 27, placed between the latter and the trailing edge, near the wing root 13.

The reinforcement means 27 and 28 are made of a thin-profile typically with rectangular cross-section and of light and stiff material, such as balsa.

In order to operate the movable horizontal aerodynamic surfaces 18, 19 actuators means 3 are placed in each half-wing, placed near the wing root 13, and near the wing tip 14.

These actuators means 3 actuate both upper 19 and lower 18 movable horizontal aerodynamic surfaces independently.

The actuator means 3, consisting of rotary actuator 31, are placed inside the airfoil, in the back part of the same, and have rotation axis 32 parallel and close to the rotation axis of the movable horizontal aerodynamic surfaces 18, 19 to which are connected.

Driving means 37 are fixed to the rotor 31, consisting of two arms which act by shear on the external surfaces of the movable horizontal aerodynamic upper 18 and lower 19 surfaces in order to control their vertical roto-translating movement and allow them to slide mutually avoiding their transverse separation.

The actuators means 3 are fixed to the structure 2 by a structural bonding achieved by the means of the adhesive layer 24 of the flexible laminate 23, realizing a "shear stress" type mounting and therefore employing basically the same technique and materials used in the actual wing skinning process according to the same method.

Close to the actuator means 3 placed at the wing tip there are surface reinforcing means 26 made with the same laminate 23 of the coating means 22 to constrain the actuator means 3 to structure 2.

The vertical aerodynamic surfaces 17 are fixed, which means that they are locked at the free end of the half-wings 10 at right angles in the preferred embodiment, or can be set at various angles, not shown in the figures.

Another variation, not shown, provides vertical aerodynamic surfaces 17 mobile and driven by the actuators 3 as above described for the horizontal control surfaces 18, 19.

The large scale aircraft production is achieved by realizing the half-wings 10 separately and then bounding them together using at least two surface reinforcing means 26, placed on the upper 16 and the lower 15 surfaces at the wing root 13. The surface reinforcing means 26 are made of the same flexible laminate 23 from the coating means 22, whose adhesive layer 24 is used to realize this junction.

Surface reinforcement means 26 are loosely arrow shaped with the apex near the leading edge 11 and with the tail growing gradually towards the trailing edge 12, in order to better transfer the loads between the two half-wings 10 and to better resist to possible collisions of the aircraft 1 with the ground.

A first variant of the preferred embodiment uses coating means 22 having an outer surface which is of fully reflective mirror type.

A second variant of the aircraft 1 uses actuator means 3 of "shear actuator" 36 type, connecting the inner surfaces of the movable horizontal aerodynamic surfaces 18, 19 and realizing the surface deflection via mutual sliding in a direction perpendicular to the trailing edge 12 and lying in a median plane between the plane of the horizontal upper 19 and lower 18 control surface.

A third variant of the aircraft 1 uses a pair of actuator means 3 for each mobile horizontal aerodynamic surface 18, 19 in each half-wing 10, thereby allowing independent control between the two half-wings 10 and between the lower and the upper surfaces of each mobile horizontal aerodynamic surface 18, 19.

This configuration offers a wide range of maneuver possibilities for the aircraft 1 and in particular several functional combinations of the mobile horizontal aerodynamic surfaces 18 and 19 can be realized. The mobile horizontal aerodynamic surfaces 18 and 19 can be used at the same time as trailing edge flaps, speed brakes, spoilers, "flapperon", "aileron", " "elevon" and "split rudder".

A fourth variant of the preferred embodiment of the aircraft 1 embeds a motor mount 29 near the trailing edge 12 in the case of pusher propulsion means, or cantilever mounted near the leading edge 11 for tractor propulsion means. In correspondence to the motor mount 29 there is a removable aerodynamic cover 4 that covers an upper portion 16 of the aircraft at the wing section where the engine is placed.

A fifth variant of the preferred embodiment provides that the coating means 22 is reinforced by placing a reinforced composite material consisting of matrix and reinforcing fibers between the filler means 21 and the coating means 22.

In addition to achieve a better production quality, the reinforcing fibers and the matrix are formed around the filler means 21 through the use of the vacuum bag technique.

The main advantage of the present invention is to provide a method for carrying out an aircraft that has an aerodynamic surface with no defects, that doesn't present discontinuous connection elements and that ensures high maneuverability.

A further advantage is to provide an aircraft whose moving aerodynamic surfaces has ability to "morph" spanwise ensuring a cleaner aerodynamic profile in all operating conditions.

Another advantage is to provide a method for carrying out an aircraft that requires a reduced number of operations easy to implement even by unskilled personnel.

## Claims

1. Method for carrying out an aircraft (1) **characterized in that**:
- Forming a filler means (21) according to the airfoil section for at least an aerodynamic surface;
- cutting and shaping a coating means (22) made of a flexible laminate (23) having at least a film layer (25) and an adhesive layer (24) at least partially;
- overlapping the coating means (22) onto the filler means (21) so that the adhesive layer (24) contacts the filler means (21) and the film layer (25) conforms the aerodynamic surface of the aircraft (1);
- fixing the coating means (22) onto the filler means (21) by means of the adhesive layer (24), and let at least a flap of the coating means (22) protruding beyond the rear portion of the filler means (21), said flap of the coating means (22) is flexibly movable respect to the filler means (21);
- positioning a plurality of actuator means (3), each one having a fixed housing and a moving member, near the end of the movable flap of the coating means (22);
- fixing the actuator means (3) housing onto the filler means (21) by means of the coating means (22) bound by the adhesive layer (24) on opposite sides of the housing, said sides being placed near the upper and the lower surfaces of the filler means (21);
- fixing the movable member of the actuator means (3) to the movable flap of the coating means (22).

2. Method according to claim 1 **characterized in** carrying out the aircraft (1) with at least two half-wings (10) and:
- shaping the filler means (21) according to each half-wing (10);
- shaping the coating means (22) according to the plane development of each half-wing (10);
- overlapping the coating means (22) on their respective means fillers (21) and attaching thereto by means of respective adhesive layers (24);
- connecting the two half-wings (10) matching the respective wing roots (13);
- fixing the two half-wings (10) setting astride the wing root (13) some surface reinforcement means (26) made with the flexible laminate (23) and bound by the respective adhesive layer (24).

3. Aircraft including at least an aerodynamic surface that forms a wing and that is of structural collaborating type, said aircraft being **characterized by** comprising:
- a filler means (21) with an aerodynamic profile complete in section or partially truncated in the rear part near a trailing edge (12) of the profile itself;
- a coating means (22) made of a flexible laminate (23), having at least a film layer (25) and, at least partially, an adhesive layer (24).

4. Aircraft according to claim 3 **characterized by** having a plurality of vertical aerodynamic surfaces (17), movable or fixed, and a plurality of lower (18) and/or upper (19) horizontal movable aerodynamic surfaces along the trailing edge (12), the movable aerodynamic surfaces being realized by prolonging the flexible laminate (23) over the filler means (21) back edge generating at least an overhanging protruding border tangent to the external profile of the same filler means (21).

5. Aircraft according to claim 4 **characterized in that** on the inner face of the profile of the lower (18) and/or upper (19) horizontal movable aerodynamic surfaces is applied at least a reinforcing means (27, 28) parallel to the trailing edge (12).

6. Aircraft according to claim 4 or claim 5 **characterized by** comprising a plurality of actuator means (3), intended to actuate the lower (18) and/or upper (19) horizontal movable aerodynamic surfaces, or the vertical movable aerodynamic surfaces (17).

7. Aircraft according to claim 6 **characterized in that** the actuator means (3) are rotary actuators (31), that are fixed to the filler means (21) by a structural bonding realized by means of the adhesive layer (24), and their rotational axis (22) are nearly parallel to the rotational axis of the movable aerodynamic surfaces which are connected thereto.

8. Aircraft according to claim 7 **characterized by** comprising driving means (37) that are fixed to the rotary actuators (31) and have a plurality of arms acting by shear on the external surfaces of the movable aerodynamic surfaces operating a deflection where the opposite surfaces mutually slide without significant transverse separation.

9. Aircraft according to claim 7 **characterized in that** the actuator means (3) connect two opposite inner faces of the movable aerodynamic surfaces and actuate the surfaces deflection by their mutual sliding having direction almost perpendicular to the trailing edge (12) and lying in a plane interposed between the movable aerodynamic surfaces planes, therefore acting as a "shear actuator" (36).

10. Aircraft according to any one of claims 6 to 9 **characterized in that** the actuator means (3) operate independently along the lower (18) and/or upper (19) horizontal movable aerodynamic surfaces, or on the vertical movable aerodynamic surfaces (17).

11. Aircraft according to any of claims 3 to 10 **characterized in that** the wing includes a wing root (13) and two half-wings (10) which are mutually connected by a plurality of surface reinforcing means (26), placed on the surfaces of lower (15) and upper (16) surface at the wing root (13), the surface reinforcing means (26) being realized with the flexible laminate (23), where the adhesive layer (24) realizes such constraint.

12. Aircraft according to any of claims 3 to 11 **characterized in that** a reinforcing means made by a matrix and reinforcing fibers is interposed between the filler means (21) and the coating means (22).

13. Aircraft according to any of claims 3 to 12 **characterized by** comprising at least an engine support (29) at least partially overlapped by coating means (22) mounted overhanging near the trailing edge (12) in the case of pushing propulsive means, or mounted overhanging near the leading edge (11) in the case of tractor propulsive means, said engine support being (29) constrained by structural bonding by means of the adhesive layer (24) of the overlapping portion of the coating means (22).

14. Aircraft according to claim 13 **characterized by** comprising an aerodynamic cover (4), removably fixed, that covers a limited portion of the upper surface (16) near and/or at the motor support (29) section.

15. Aircraft according to any claims 3 to 14 **characterized in that** the film layer (25) is completely reflecting or has a livery printed on the same film.
